**Europäisches Patentamt**

**European Patent Office**

**Office européen des brevets**

(19)

(11) Veröffentlichungsnummer: **0 227 882**
B1

(12)

# EUROPÄISCHE PATENTSCHRIFT

(45) Veröffentlichungstag der Patentschrift:
10.01.90

(51) Int. Cl.⁴: **G01F 23/22**, G01F 23/26

(21) Anmeldenummer: 86108865.6

(22) Anmeldetag: 30.06.86

(54) **Elektrischer Füllstandsgeber.**

(30) Priorität: 30.11.85 DE 3542455

(43) Veröffentlichungstag der Anmeldung:
08.07.87 Patentblatt 87/28

(45) Bekanntmachung des Hinweises auf die Patenterteilung:
10.01.90 Patentblatt 90/2

(84) Benannte Vertragsstaaten:
DE FR GB IT SE

(56) Entgegenhaltungen:
EP-A- 0 123 779
EP-A- 0 130 291
DE-A- 3 108 969
US-A- 4 204 427

(73) Patentinhaber: VDO Adolf Schindling AG,
Gräfstrasse 103, D-6000 Frankfurt/Main 90(DE)

(72) Erfinder: Schneider, Dieter, Im Sperber,
D-6000 Frankfurt/Main 60(DE)

(74) Vertreter: Klein, Thomas, Dipl.-Ing. (FH), Sodener
Strasse 9 Postfach 6140, D-6231 Schwalbach a. Ts.(DE)

## Beschreibung

Die Erfindung betrifft einen elektrischen Füllstandsgeber für einen Flüssigkeitsbehälter, vorzugsweise für einen Kraftstofftank eines Kraftfahrzeugs, mit zwei ineinanderliegenden Rohren, mit einer eine elektrisch leitfähige Schicht tragenden Folie, welche zwischen zwei halbrohrförmigen, das innere Rohr bildenden Tragkörpern eingespannt ist, wobei die Tragkörper Durchtrittsöffnungen für die Flüssigkeit aufweisen.

Ein derartiger Füllstandsgeber nach dem Gattungsbegriff ist bekannt aus der EP-A 1 123 779. Dieser weist einen mit der Leiterfolie versehenen Abschnitt auf, der sich unter Federvorspannung zwischen Deckel und Boden des Flüssigkeitsbehälters erstreckt und der gemäß einer Ausführungsform aus zwei vollständig trennbaren Rohrhälften besteht, zwischen denen die Leiterfolie eingespannt ist.

Das so gebildete Rohr wird durch ein aufgeschobenes einstückiges Rohr zusammengehalten, wobei zwischen den beiden konzentrischen Rohren keine Hohlräume vorgesehen sind.

Ferner ist aus der EP-A 1 130 291 ein Behälter mit einer in ihm angeordneten Füllstands-Meßeinrichtung bekannt, deren Leiterfolie unmittelbar an der Behälterwand und am Behälterboden gehalten ist, wobei die Haltemittel so ausgebildet sind, daß die Flüssigkeit die Leiterfolie allseitig von Flüssigkeit umspült werden kann.

An Flüssigkeitsgeber, insbesondere für Kraftstofftanks in Kraftfahrzeugen, sind unter anderem folgende Anforderungen zu stellen:

Neben einer möglichst genauen Anzeige ist eine Unterdrückung von Meßschwankungen bei schwankendem Kraftstoffstand bei Fahrzeugbewegungen und teilweise gefülltem Tank (Schwappen) erforderlich. Außerdem ist eine hohe mechanische Stabilität notwendig.

Aufgabe der vorliegenden Erfindung ist es, einen elektrischen Füllstandsgeber für einen Flüssigkeitsbehälter, insbesondere für einen Kraftstofftank eines Kraftfahrzeugs anzugeben, bei welchem die vorgenannten Anforderungen besonders gut erfüllt werden.

Diese Aufgabe wird erfindungsgemäß dadurch gelöst, daß die Tragkörper von jeweils zwei Halbrohren verschiedener Weite gebildet sind, welche an ihren Längsseiten durch sich radial und axial erstreckende Teile miteinander verbunden sind, wobei die vier Halbrohre die zwei ineinanderliegenden Rohre bilden, wobei der durch die kleineren Halbrohre gebildete zylindrische innere Hohlraum die zur Erfassung des Füllstands dienende, leitfähige Schicht enthält und wobei zwischen den Halbrohren jeweils ein zylindrischer äußerer Hohlraum gebildet ist.

Eine Weiterbildung der Erfindung sieht vor, daß die äußeren Halbrohre nach dem Zusammenfügen zusammen ein Rohr mit einem elliptischen Querschnitt bilden.

Dadurch wird außer der guten mechanischen Stabilität und verbesserten hydraulischen Dämpfung eine Sicherung gegen Verdrehen erzielt.

Wenn gemäß einer anderen Weiterbildung der Erfindung die zu einem Tragkörper gehörenden Halbrohre und die sie verbindenden Teile einstückig hergestellt sind, ergibt sich hierdurch eine weitere Erhöhung der mechanischen Stabilität.

Auf der Folie können elektrische Leiterbahnen aufgebracht sein, welche entweder als temperaturabhängiger Widerstand ausgebildet sind oder einen Kondensator bilden. Bei der Ausbildung als temperaturabhängiger Widerstand erfolgt die Messung des Füllstandes dadurch, daß ein die Widerstandsbahn erwärmender Strom eingeprägt wird und die Spannung an der Widerstandsbahn gemessen wird. Da derjenige Teil der Widerstandsbahn, welcher von der Flüssigkeit umspült wird, von dieser gekühlt wird, ist der Gesamtwiderstand also auch die an der Widerstandsbahn abfallende Spannung ein Maß für den Flüssigkeitsstand. Bei der Ausbildung der Leiterbahnen als Kondensator wird der Effekt ausgenutzt, daß die Flüssigkeit eine andere Dielektrizitätskonstante als das sich über der Flüssigkeit befindliche Gas hat. Weitere Einzelheiten zu diesem Verfahren sind an sich bekannt und brauchen im Zusammenhang mit der vorliegenden Erfindung nicht näher erläutert zu werden.

Die Erfindung läßt zahlreiche Ausführungsformen zu. Eine davon ist schematisch in der Zeichnung an Hand mehrerer Figuren dargestellt und nachfolgend beschrieben. Es zeigt:

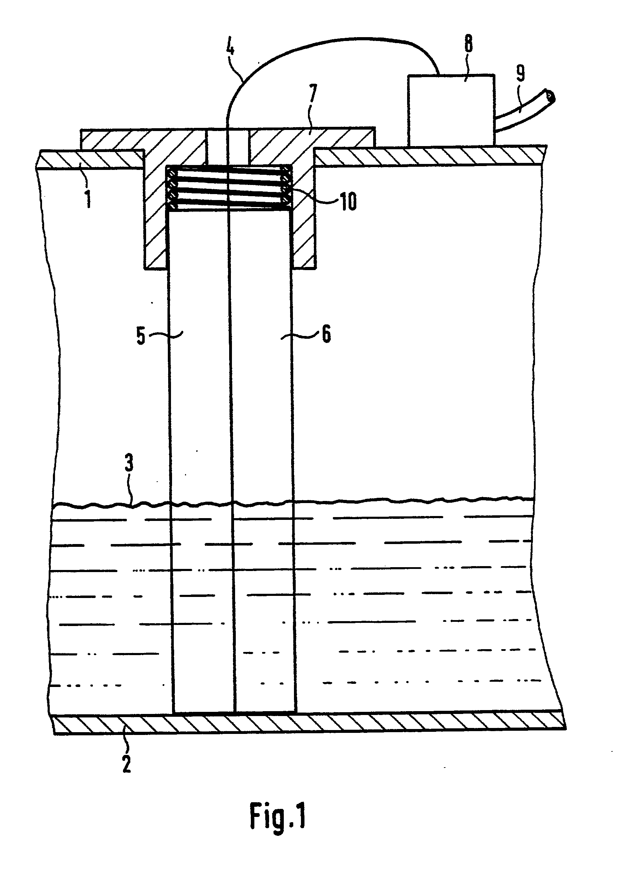

Fig. 1 eine teilweise geschnittene Darstellung eines in einen Kraftstofftank eingebauten elektrischen Füllstandsgebers und

Fig. 2 einen Querschnitt durch einen erfindungsgemäßen Füllstandsgeber.

Gleiche Teile sind in den Figuren mit gleichen Bezugszeichen versehen.

Ein nur teilweise dargestellter Kraftstofftank weist eine obere Wand 1 und eine untere Wand 2 auf. Der Kraftstofftank ist bis zu der Wellenlinie 3 mit Kraftstoff gefüllt. Der Füllstandsgeber besteht im wesentlichen aus einer streifenförmigen Folie 4, den Tragkörpern 5, 6, einer Halterung 7 und einer Anschlußeinrichtung 8, in welcher eine Auswerteschaltung untergebracht ist. Über ein Kabel 9 wird Betriebsspannung zugeführt und ein dem Füllstand entsprechendes Signal abgeleitet.

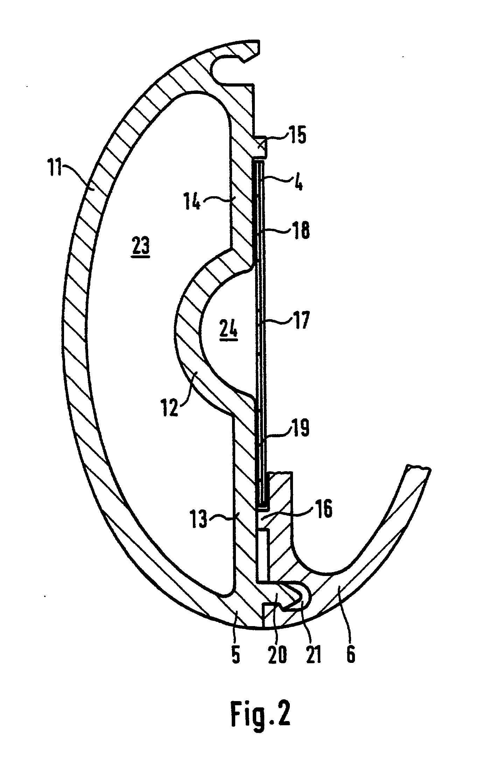

In die streifenförmige Folie 4 sind, wie im Zusammenhang mit Fig. 2 näher dargestellt ist, elektrische Leiter derart eingebracht, daß sie hermetisch eingeschlossen sind, so daß weder Kraftstoff noch Luft mit den Leitern in Berührung kommt.

Da bei Füllstandsgebern für Kraftfahrzeuge die Meßgenauigkeit gerade im unteren Teil des Meßbereichs wichtig ist, ist es erforderlich, daß der Füllstandsgeber die untere Wand des Kraftstofftanks berührt. Um dieses auch bei den im Betrieb vorkommenden Deformierungen des Kraftstofftanks zu gewährleisten, sind die Tragkörper 5, 6 in einer Halterung 7 verschiebbar angeordnet und werden durch eine Feder 10 nach unten gedrückt.

Bei dem in Fig. 2 im Querschnitt dargestellten Ausführungsbeispiel weisen die äußeren Rohre zusammen einen elliptischen Querschnitt auf. Dadurch ist gewährleistet, daß sich die Tragkörper 5, 6 nicht in der Halterung 7 verdrehen können und somit die Folie 4 nicht durch ein derartiges Verdrehen beschädigt werden kann. Der Tragkörper 6 ist nur teilweise dargestellt. Beide Tragkörper weisen ein identisches Profil auf, so daß zur Herstellung die gleiche Form benutzt werden kann.

Der Tragkörper 5 besteht aus einem äußeren Halbrohr 11, einem inneren Halbrohr 12 und die Halbrohre verbindenden Teilen 13, 14. Die Außenfläche der Teile 13 und 14 dient zum Einspannen der Folie 4, wobei jeweils ein Vorsprung 15 im Tragkörper 5 und 16 im Tragkörper 6 eine seitliche Führung der Folie 4 gewährleistet. Die Folie 4 besteht aus zwei Schichten aus mechanisch und chemisch widerstandsfähigem Kunststoff, in welche Leiterbahnen 17, 18, 19 eingebettet sind. Bei dem beschriebenen Ausführungsbeispiel ist die Leiterbahn 17 ein Leiter mit temperaturabhängigem Widerstand, während die Leiterbahnen 18 und 19 zusammen eine elektrische Zuleitung zum unteren Punkt der Leiterbahn 17 darstellen.

Die Tragkörper 5, 6 weisen jeweils Rastnasen 20 auf, welche bei der Montage des Füllstandsgebers in entsprechende Aussparungen 21 gepreßt werden.

Der zwischen den Halbrohren 11, 12 liegende äußere Hohlraum 23 und der durch das innere Halbrohr 12 gebildete innere Hohlraum 24 sowie die entsprechenden Hohlräume des Tragkörpers 6 bilden zusammen mit Durchtrittsöffnungen eine gute Dämpfung des Schwappens des Kraftstoffs im Kraftstofftank. Das innere Halbrohr 12 ist mit seinem Durchmesser derart dimensioniert, daß eine ausreichende Konvektion im Hohlraum 24 zur Kühlung des Leiters 17 möglich ist. Als besonders günstig haben sich Werte im Bereich von d = 5 bis d = 10 mm bewährt. Ein zu großer Durchmesser des inneren Halbrohres 12 würde wiederum zu einem Schwappen des Kraftstoffs innerhalb des Halbrohres führen.

Der Durchmesser bzw. die Durchmesser des äußeren Halbrohres 11 sind im wesentlichen durch eine ausreichende Stabilität der gesamten Anordnung bestimmt. Hierbei haben sich Werte von einigen Zentimetern bewährt.

## Patentansprüche

1. Elektrischer Füllstandsgeber für einen Flüssigkeitsbehälter, vorzugsweise für einen Kraftstofftank eines Kraftfahrzeugs, mit zwei ineinanderliegenden Rohren, mit einer eine elektrisch leitfähige Schicht tragenden Folie (4), welche zwischen zwei halbrohrförmigen, das innere Rohr bildenden Tragkörpern (5, 6) eingespannt ist, wobei die Tragkörper Durchtrittsöffnungen für die Flüssigkeit aufweisen, dadurch gekennzeichnet, daß die Tragkörper (5, 6) von jeweils zwei Halbrohren (11, 12) verschiedener Weite gebildet sind, welche an ihren Längsseiten durch sich radial und axial erstreckende Teile (13, 14) miteinander verbunden sind, wobei die vier Halbrohre (11, 12) die zwei ineinanderliegenden Rohre bilden, wobei der durch die kleineren Halbrohre (12) gebildete zylindrische innere Hohlraum (24) die zur Erfassung des Füllstands dienende, leitfähige Schicht (17) enthält und wobei zwischen den Halbrohren (11, 12) jeweils ein zylindrischer äußerer Hohlraum (23) gebildet ist.

2. Elektrischer Füllstandsgeber nach Anspruch 1, dadurch gekennzeichnet, daß die äußeren Halbrohre (11) nach dem Zusammenfügen zusammen ein Rohr mit einem elliptischen Querschnitt bilden.

3. Elektrischer Füllstandsgeber nach Anspruch 1 oder 2, dadurch gekennzeichnet, daß jeweils ein Tragkörper (5, 6) einschließlich der ihn mit dem anderen Tragkörper verbindenden Teile (13, 14) einstückig hergestellt ist.

4. Elektrischer Füllstandsgeber nach einem der vorangehenden Ansprüche, dadurch gekennzeichnet, daß die Folie (4) mindestens eine elektrisch leitfähige Schicht (17) aufweist, deren Widerstand temperaturabhängig ist.

5. Elektrischer Füllstandsgeber nach einem der Ansprüche 1 bis 3, dadurch gekennzeichnet, daß die Folie zwei sich in Längsrichtung erstreckende elektrische Leiterbahnen aufweist, welche einen Kondensator bilden.

## Claims

1. Electrical level sensor for a liquid container, preferably for a fuel tank of a motor vehicle, with two tubes situated one within the other, with a sheet element (4) which carries an electrically conductive layer and which is clamped between two supporting elements (5, 6) which are in the form of half-tubes and form the inner tube, the supporting elements having through apertures for the passage of the liquid, characterised in that the supporting elements (5, 6) are formed of in each case two half-tubes (11, 12) of different width which are connected to one another at their longitudinal sides by radially and axially disposed parts (13, 14), the four half-tubes (11, 12) forming the two tubes situated one within the other, the cylindrical inner hollow space (24) as formed by the smaller half-tubes (12) containing the conductive layer (17) which serves to ascertain the level, and there being formed between the half-tubes (11, 12) in each case a cylindrical outer hollow space (23).

2. Electrical level sensor according to claim 1, characterised in that the outer half-tubes (11), after joining together, together form a tube which has an elliptical cross-section.

3. Electrical level sensor according to claim 1 or 2, characterised in that each supporting element (5, 6) is made in one piece along with the parts (13, 14) which connect it to the other supporting element.

4. Electrical level sensor according to one of the preceding claims, characterised in that the sheet element (4) has at least one electrically conductive layer (17) the resistance of which is temperature-dependent.

5. Electrical level sensor according to one of claims 1 to 3, characterised in that the sheet element has two electrical conductor tracks which extend in the longitudinal direction and which form a capacitor.

## Revendications

1. Capteur ou détecteur électrique de niveau pour récipient destiné à contenir un liquide, de préférence pour réservoir de carburant de véhicule automobile, ce détecteur comportant deux tubes situés l'un dans l'autre, et une feuille mince (4) portant une couche électriquement conductrice, laquelle est tendue entre deux corps (5, 6) de support en forme de demi-tubes, formant le tube intérieur, les corps porteurs présentant des ouvertures de passage destinées au liquide, détecteur caractérisé en ce que les corps (5, 6) de support sont formés dans chaque cas par deux demi-tubes (11, 12) de largeur différente, qui sont reliés entre eux sur leurs côtés longitudinaux par des éléments (13, 14) qui s'étendent radialement et axialement, les quatre demi-tubes (11, 12) formant deux tubes situés l'un dans l'autre, l'espace creux (24) cylindrique intérieur formé par les demi-tubes (12) plus petits contenant la couche (17) conductrice, servant à déceler le niveau, et un espace creux (23) cylindrique extérieur étant formé dans chaque cas entre les demi-tubes (11, 12).

2. Détecteur électrique de niveau selon la revendication 1, caractérisé en ce que les demi-tubes extérieurs (11) forment ensemble, après leur assemblage, un tube de section transversale elliptique.

3. Détecteur électrique de niveau selon la revendication 1, caractérisé en ce que, dans chaque cas, un corps (5, 6) de support est fabriqué en une seule pièce, y compris les éléments (13, 14) qui le relient à l'autre corps de support.

4. Détecteur électrique de niveau selon l'une des revendications précédentes, caractérisé en ce que la feuille mince (4) présente au moins une couche (17) électriquement conductrice, dont la résistance a une valeur qui dépend de la température.

5. Détecteur électrique de niveau selon l'une des revendications 1 à 3, caractérisé en ce que la feuille mince présente des pistes électriquement conductrices, qui s'étendent dans le sens longitudinal et qui forment un condensateur.

Fig.1

Fig.2